(19) Europäisches Patentamt
European Patent Office
Office européen des brevets

(11) EP 0 449 406 B1

(12) **EUROPEAN PATENT SPECIFICATION**

(45) Date of publication and mention of the grant of the patent:
**09.04.1997 Bulletin 1997/15**

(21) Application number: **91300798.5**

(22) Date of filing: **31.01.1991**

(51) Int Cl.[6]: **C10M 105/00**, C10M 105/36, C10M 105/38, C10M 105/40, C10M 105/42, C10M 107/34, C10M 111/04, C10M 169/04, C09K 5/04
// (C10M105/00, 105:36, 105:38, 105:40, 105:42, 105:52), (C10M111/04, 105:36, 105:38, 105:40, 105:42, 105:52, 107:28, 107:32, 107:34), (C10M169/04, 111:04, 137:10), C10N20:02, C10N40:30

(54) **Esters as lubricants for a haloalkane refrigerant**

Ester als Schmiermittel für Haloalkangefriermittel

Esters comme lubrifiants pour réfrigérant à base d'alcane halogéné

(84) Designated Contracting States:
**DE FR GB**

(30) Priority:
**31.01.1990 JP 22689/90**
**20.02.1990 JP 39506/90**
**28.02.1990 JP 50745/90**
**28.02.1990 JP 50746/90**
**08.10.1990 JP 270274/90**
**09.11.1990 JP 305733/90**
**09.11.1990 JP 305734/90**

(43) Date of publication of application:
**02.10.1991 Bulletin 1991/40**

(60) Divisional application: **94202207.094202208.8**

(73) Proprietor: **Tonen Corporation**
**Tokyo 100 (JP)**

(72) Inventors:
- **Fukuda, Masaaki, c/o Tonen Corporation Ohi-machi, Iruma-gun, Saitama 354 (JP)**
- **Tomizawa, Hirotaka, c/o Tonen Corporation Ohi-machi, Iruma-gun, Saitama 354 (JP)**
- **Ohta, Mitsuo, c/o Tonen Corporation Ohi-machi, Iruma-gun, Saitama 354 (JP)**
- **Osaka, Hideki, c/o Tonen Corporation Ohi-machi, Iruma-gun, Saitama 354 (JP)**
- **Ogano, Satoshi, c/o Tonen Corporation Ohi-machi, Iruma-gun, Saitama 354 (JP)**
- **Satoh, Takehisa, c/o Tonen Corporation Ohi-machi, Iruma-gun, Saitama 354 (JP)**
- **Ashibe, Kenji, c/o Tonen Corporation Ohi-machi, Iruma-gun, Saitama 354 (JP)**
- **Nomura, Takeshi, c/o Tonen Corporation Ohi-machi, Iruma-gun, Saitama 354 (JP)**

(74) Representative: **Bawden, Peter Charles et al**
**EXXON CHEMICAL LIMITED**
**Exxon Chemical Technology Centre**
**PO Box 1**
**Abingdon Oxfordshire OX13 6BB (GB)**

(56) References cited:
**EP-A- 0 406 479**
**DE-A- 2 943 446**
**GB-A- 2 216 541**
**US-A- 4 959 169**
**WO-A-90/12849**
**GB-A- 1 460 665**
**US-A- 4 851 144**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 449 406 B1

## Description

The present invention relates to a lubricant for the refrigerant 1,1,1,2-tetrafluoroethane, which lubricant has excellent compatibility with the refrigerant, low hygroscopic property, high thermal stability and lubricating property.

R11 ($CCl_3F$) is used as a refrigerant for air-conditioning systems in buildings, and R12 ($CCl_2F_2$) is used for electric refrigerators for foodstuffs or as refrigerant for automotive air-conditioning systems of the rotary or reciprocating type. However, they cause destruction of ozone in the stratosphere, and alternative substances are urgently needed.

In recent years, R123 ($CF_3CHCl_2$) has been considered as an alternative for R11, but it has some problems such as high price or toxicity. R22 ($CHClF_2$) is being considered as an alternative for R12 because of its easiness to decompose; however, the operating pressure at normal temperature is high because of its low boiling point, and pressure-resistant equipment is needed. Also, there are the problems of leaking from packings and hose components as well as problems of low electrical insulating property.

On the other hand, 1,1,1,2-tetrafluoroethane (R134a), known as an alternative for R12, does not contain chlorine which cause ozone destruction, and has passed acute and subacute toxicity tests. Thus, attention is now focused on its application.

Our EP-A-0 421 765 (published on 10.4.91) claims a refrigerant composition of R134a and a specified polyoxy propylene glycol alkyl ether of high viscosity.

At present, polyether synthetic oils of high viscosity are under development as lubricating oils. The operating temperature of a lubricating oil for a refrigerant is normally between -30 and 100°C; when a polyether synthetic oil is mixed with 1,1,1,2-tetrafluoroethane refrigerant, these substances separate from each other at high temperature and there also are problems in its hygroscopic property and lubricating property.

The requirements for lubricating oils for refrigerant are: wide temperature range for compatibility with refrigerant (compatibility), i.e. no clouding at high temperature (high solvation of refrigerant to lubricating oil), high molecular polarity of lubricating oil, no separation of lubricating oil from refrigerant at low temperature (high solubility of lubricating oil to refrigerant, and low molecular weight of lubricating oil). For this reason, high compatibility with the refrigerant is very important, and it is necessary that the substance is not separated from the refrigerant at high or low temperature and that it does not react with it. If the compatibility with the refrigerant is low, seizure may occur of a moving part of the refrigerator, which becomes subject to high temperature.

The range of viscosity suitable for such lubricant differs according to each type of refrigerator, and a lubricating oil of suitable viscosity is required.

Further, the lubricant must not be corrosive to refrigerating equipment, must not reduce its insulating property, and must have high stability to the refrigerant.

Also, the lubricant must improve the wear-resistant property of aluminium components in pistons and bearings, made of iron and aluminium, of the refrigerator.

R143a is not miscible with mineral oils.

The object of the present invention is to provide a lubricant suitable for use with 1,1,1,2-tetrafluoroethane refrigerant having a wide compatibility temperature range with the refrigerant, having no corrosive effect on refrigerating equipment, showing no reduction in insulating property, having high stability to the refrigerant and thermal stability and improving the wear-resistant property of the equipment components.

According to the present invention we provide a lubricating oil for a refrigerant which has a moisture content of 500 ppm or less comprising an ester of an organic carboxylic acid, which is miscible without separation with the refrigerant 1,1,1,2-tetrafluroethane at a temperature in the range of +10°C to 66°C, has a viscosity range of 2 to 30 $mm^2/s$ at 100°C, and an ash content of 10 ppm or less.

The invention also includes the resultant lubricated refrigerant compositions.

Preferably the ester is a diester of an aliphatic monohydric alcohol and an aliphatic or aromatic dicarboxylic acid.

The ester may be selected from esters of an aliphatic polyhydric alcohol and aliphatic carboxylic acid, partial esters of an aliphatic polyhydric alcohol and aliphatic carboxylic acid, or complex esters of an aliphatic polyhydric alcohol and fatty acid having 3 - 12, preferably 5 - 7, carbon atoms and an aliphatic dicarboxylic acid or aromatic dicarboxylic acid.

The ester can be of a polyoxyalkylene glycol monoether and a dicarboxylic acid of the following formula (A):

$$R^1O-(-R^2O-)_m-\overset{O}{\overset{\|}{C}}-R^3-\overset{O}{\overset{\|}{C}}-(-OR^4)_n-OR^5$$

wherein $R^1$ and $R^5$ each represents the same or different C1-8 alkyl group, $R^2$ and $R^4$ each is a C2-6 alkylene group,

R represents a C2-13 alkylene group or an aromatic ring, and m and n each represents an integer of 2 or more of an ester consisting of an addition derivative of a polyoxyalkylene of a trimethylolalkane, of the following general formula (B):

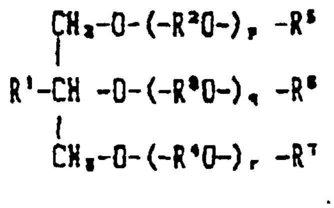

wherein R [1] represents a C1 - 8 alkyl group, $R^2$, $R^3$ and $R^4$ each is a C2 - 6 alkylene group, $R^5$, $R^6$, and $R^7$ each is the same or different acyl group; and p, q and r each is an integer of 1 or more.

It is preferable that the lubricant ester has a total acid number of 0.05 mg KOH/g or less, more preferably 0.03 mg KOH/g or less, a peroxide number of 1 meq./kg or less, or more preferably 0.5 meq./kg or less, an aldehyde number of 1 mg KOH/g or less, more preferably 0.8 mg KOH/g or less, a bromine index of 10 mg/100 g or less, more preferably 5 mg/100 g or less, and a moisture content of 500 ppm or less, preferably 200 ppm or less. It is preferred that the ash content be 5 ppm or less.

A refrigerant should have a different viscosity range depending on the types of refrigerator equipment. By the present invention, a lubricating oil suitable for each type of refrigerator can be obtained either by selecting an ester with suitable viscosity range or by adjusting the viscosity by mixing an ester of different viscosity range while maintaining compatibility of the oily organic carboxylic acid ester with the refrigerant, or by adjusting the viscosity through the addition of polymers by adding a polymer selected from a polyester of a polyalkylmetacrylate, polyalkylene glycol or neopentylglycol with a carboxylic acid. As the result, a lubricating oil having high 'compatibility with the refrigerant and low hygroscopic property as well as good heat-resistant property can then be obtained.

The esters used can be obtained from a normal esterification reaction, purified, and its acid number, peroxide number, aldehyde number, bromine index, ash content and moisture content adjusted to the range suitable for the intended refrigeration use. The resulting lubricating oily ester shows no reduction in corrosive property and insulating property and has excellent refrigerant stability, hydrolytic stability and insulating property.

As the lubricant in this invention, the following types of esters having high molecular polarity are used:

Aliphatic carboxylic acids are used of saturated structure.

(1) First, polyesters of a polyol and straight chain or branched chain carboxylic acid can be used.

As the polyol forming these polyesters, there are, for example, trimethylolpropane, ditrimethylolpropane, trimethylolethane, ditrimethylolethane, pentaerythritol, dipentaerythritol and tripentaerythritol. C3 - 12 acids can be used, such as propionic, butyric, valeric, hexanoic, octanoic, nonanoic, decanoic, dodecanoic, isovaleric, neopentanoic, 2-methylbutyric, 2-ethylbutyric, 2-methylpentanoic, 2-methylhexanoic, 2-ethylhexanoic, isooctanoic, isononanoic, isodecanoic, 2,2'-di-methyloctanoic or 2-butyloctanoic acid.

Partial esters of an aliphatic polyol and straight chain or branched chain carboxylic acid can also be used.

As aliphatic polyols, there are, for example, trimethylolpropane, ditrimethylolpropane, trimethylolethane, ditrimethylolethane, pentaerythritol, dipentaerythritol and tripentaerythritol. Fatty acids having 3 - 9 carbon atoms can be used. It is preferably to use fatty acids such as propionic, butyric, valeric, hexanoic, heptanoic, ootanoic, nonanoic, 2-methylhexanoic, 2-ethylhexanoic, isooctanoic, isononanoic, isodecanoic, 2,2'-dimethyloctanoic or 2-butyloctanoic acid.

As an ester of an aliphatic polyol and a straight chain or branched chain carboxylic acid, there are, for example, pentaethyritol, dipentaerythritol or tripentaerythritol, and it is preferably to use a fatty acid having 5 - 12, or more preferably 5 - 7 carbon atoms, e.g. valeric, hexanoic, heptanoic, 2-methylhexanoic, 2-ethylhexanoic, isooctanoic, isononanoic, isodecanoic, 2,2'-dimethyloctanoic or 2-butyloctanoic acid. A mixture of oily esters can improve compatibility with refrigerant at low temperature.

Partial esters can be obtained through reaction by adequately adjusting the reacting mol number of the aliphatic polyhydric alcohol and fatty acid.

(2) Diesters of neopentyl glycol as aliphatic polyol and a straight chain or branched chain C6 - 9 carboxylic acid, e.g. hexanoic, heptanoic, octanoic, nonanoic, 2-ethylbutylric, 2-methylhexanoic, 2-ethylhexanoic, isooctanoic or isononanoic acid can be used.

(3) Complex esters of partial esters of an aliphatic polyhydric alcohol with straight chain or branched C3 - 9 fatty acids and straight chain or branched chain aliphatic or aromatic dicarboxylic acids can be used.

As an aliphatic polyol, trimethylolpropane, trimethylolpropane, trimethylolethane or pentaerythritol can be used.

As C3 - 12 aliphatic carboxylic acid, propionic, butyric, isobutyric, valeric, hexanoic, heptanoic, octanoic, nonanoic, decanoic, dodecanoic, 2-methylhexanoic, 2-ethylhexanoic, isooctanoic, isononanoic, isodecanoic, 2,2'dimethyloctanoic or 2-butyloctanoic acid can be used.

In such complex esters, it is preferably to use a C5 - 7 aliphatic carboxylic acid or more preferably, a C5 - 6 aliphatic carboxylic acid. The ester oil thus obtained can improve the compatibility with the refrigerant at low temperature.

As aliphatic carboxylic acid, valeric, hexanoic, isovaleric, 2-methylbutyric or 2-ethylbutryic acid, or a mixture thereof can be used. A mixture of such acids having 5 and 6 carbon atoms, mixed in a weight ratio of 10:90 to 90:10, can be preferably used.

As aliphatic dicarboxylic acid to be used for esterification with a polyhydric alcohol together with aliphatic carboxylic acid, there are succinic acid, adipic acid, pimelic acid, suberic acid, azelaic acid, sebacic acid, undecanoic dicarboxylic acid, dodecanoic dicarboxylic acid, tridecanoic dicarboxylic acid, carboxyoctadecanoic acid, carboxymethyloctadecanoic acid and docosanoic dicarboxylic acid. As aromatic dicarboxylic acid, there are phthalic or isophthalic acid, trimellitic acid as an aromatic tricarboxylic acid, and pyromellitic acid as aromatic tetracarboxylic acid.

The molar ratio of the aliphatic monocarboxylic acid and aliphatic acid or aromatic dicarboxylic acid, aromatic tricarboxylic acid and aromatic tetracarboxylic acid is preferably 6:1. In the esterification reaction, the ratio of total molar quantity of aliphatic monocarboxylic acid and aliphatic dicarboxylic acid or aromatic dicarboxylic acid to the quantity of aliphatic polyhydric alcohol is preferably 7:1.

The ester may be prepared through reaction of partially esterified substance with aliphatic monocarboxylic acid after the esterified substance is obtained by the reaction of a polyhydric alcohol with aliphatic dicarboxylic acid or aromatic dicarboxylic acid or mixed acids in the predetermined ratio, or the order of reaction of the carboxylic acids may be reversed.

(4) Dialkyl esters (C16 - 22) of straight chain or branched chain aliphatic dicarboxylic acid may be used.

As the aliphatic dicarboxylic acid, there are succinic acid, glutaric acid, adipic acid, pimelic acid, suberic acid, azelaic acid, sebacic acid, undecanoic dicarboxylic acid, dodecanoic dicarboxylic acid, tridecanoic dicarboxylic acid, carboxyoctadecanoic acid, carboxymethyloctadecanoic acid, and docosanoic diacid, or an acid substance having the same property as these may be used. It is preferable to use an aliphatic dicarboxylic acid such as succinic acid, adipic acid, sebacic acid, undecanoic diacid, dodecanoic diacid, carboxyoctadecanoic acid or carboxymethyloctadecanoic acid.

As the alcohol components, there are C5-8 alcohols e.g. amyl alcohol, hexyl alcohol, heptyl alcohol and octyl alcohol as well as isomers of these substances, more preferably, isoamyl, isohexyl and octyl alcohol.

Suitable specific esters are dioctyl adipate, diisoheptyl adipate, dihexyl sebacate and diheptyl succinate.

(5) Dialkyl esters (having 18 - 26 carbons) of aromatic dicarboxylic acid can also be used.

As aromatic dicarboxylic acid, there are phthalic acid, isophthalic acid and equivalents. As alcohol component in a dialkylester, a C5 - 8 alcohol such as amyl alcohol, hexyl alcohol, heptyl alcohol, octyl alcohol and isomers of these substances can be used. It is preferable to use isoamyl, isoheptyl or octyl alcohol. Such aromatic diesters include dioctyl phthalate, diisoheptyl phthalate and diisoamyl phthalate.

(6) As alcohol components, addition products of an alkylene oxide of a monohydric alcohol selected from methanol, ethanol, propanol or butanol, or isomers of these substances, or addition products of alkylene oxide of trihydric alcohol such as glycerine or trimethylolpropane can be used. Those addition products of 1 - 10 mols, or more preferably, 1 - 6 mols of alkylene oxide selected from ethylene oxide, propylene oxide, butylene oxide or amylene oxide and isomers of these substances are used.

As esters, there are diesters obtained by esterification of addition products of an alkylene oxide to a monohydric alcohol by an aliphatic dicarboxylic acid such as adipic acid, pimelic acid, pimelic acid, suberic acid, azelaic acid, sebacic acid, undecane dicarboxylic acid, dodecane dicarboxylic acid, carboxyoctadecane acid, carboxymethyloctadecane acid or docosane dicarboxylic acid or by an aromatic dicarboxylic acid such as phthalic acid.

Also, esters obtained through esterification of addition products of 1 - 10 mols of alkylene oxide of polyhydric alcohol such as glycerine, trimethylolpropane, etc. by straight chain or branched chain C3 - 12 aliphatic carboxylic acids can be used, e.g. propionic, butyric, valeric, hexanoic heptanoic, octanoic, nonanoic, decanoic, dodecanoic, 2-methylhexanoic, 2-ethylhexanoic, isooctanoic, isononanoic, isodecanoic, 2,2'-dimethyloctanoic or 2-butyloctanoic acid.

As the fatty acid in the above esters, a straight chain or branched chain aliphatic carboxylic acid can be used. It is preferable to use a branched chain aliphatic carboxylic acid because of high hydrolytic stability and good compatibility with a hermetic coil.

We now describe the methods to purify the esters.

Esters can be obtained by esterification reaction, e.g. by esterification of alcohols and aliphatic carboxylic acid in the presence of an acid catalyst, e.g. phosphoric acid. The esters obtained by such method have a total acid number of 0.1 - 0.5 mg KOH/g, peroxide number of 0.1 - 5 meq./kg, aldehyde number of 0.1 - 5 mg KOH/g, bromine index 1 - 100 mg/100 g, ash content 5 - 50 ppm, and moisture content 300 - 1000 ppm.

However, if the total acid number in the ester for use in a refrigerator is high, metal components may be corroded, and the function as the lubricating oil for the refrigerator is decreased through hydrolysis of the lubricating oil itself.

Also, the lubricant must have a high insulating property because it is placed in the motor section of the refrigerator. Thus, it is preferable that the lubricating oil for refrigerator has a total acid number of 0.05 mg KOH/g or less.

Further, to increase the refrigerant stability, it is necessary to reduce the peroxide number, aldehyde number and bromine index to lower values, to reduce ash content to reduce sludge and the like, and to reduce the water content in order to maintain hydrolytic stability and insulating property.

For this purpose, it is necessary to purify the above esters obtained by normal esterification reaction and to adjust the above indices for properties of the ester to a range well suitable for a lubricant oil for a refrigerant.

It is preferable to purify an organic carboxylic acid ester through contact processing with e.g. silica gel, activated alumina, activated carbon or a zeolite. The contact condition in this case may be determined according to each case, and it is preferable to perform the processing at 100°C or less.

Normally, the viscosity at 100°C of the lubricant for use in a refrigerator is 2 - 9 $mm^2/s$, or more preferably 3 - 7 $mm^2/s$, and for use in a car air-conditioner is preferably 7 - 30 $mm^2/s$. In a car air-conditioner, the viscosity range of the oily ester is preferably 7 - 15 $mm^2/s$, or more preferably 8 - 11 $mm^2/s$ for the reciprocating type compressor, and 15 - 30 $mm^2/s$ or more preferably 20 -27 $mm^2/s$ for rotary type compressor.

The viscosity range of the lubricants according to the present invention is thus 2 - 30 $mm^2/s$. A viscosity less than 2 $mm^2/s$ is not desirable because of low refrigerant viscosity, poor lubricating and sealing properties, and low thermal stability; more than 30 $mm^2/s$ is not desirable because the compatibility of the ester with the refrigerant is decreased.

Even when it is within the above range, the operating viscosity range differs according to each equipment used. If it exceeds 9 $mm^2/s$ in case of a refrigerator, the friction loss at the sliding portion may be increased.

Further, if it is less than 7 $mm^2/s$ in case of a car air-conditioner of the reciprocating type, a problem arises with lubricating property, and if it exceeds 15 $mm^2/s$, a problem arises of increased friction loss on the sliding portion. In case of a rotary type air-conditioner, a problem arises with sealing property if it is less than 15 $mm^2/s$, and the problem of compatibility with refrigerant if it is more than 30 $mm^2/s$.

Esters may be used alone, or the above desired esters may be suitably combined in order to adjust the viscosity range according to each application.

For example, when viscosity is high in case of complex type esters of type (13) above, the viscosity range can be adjusted for each application by adding an ester of an aliphatic polyhydric alcohol with an aliphatic carboxylic acid having 3 - 9 carbons while maintaining compatibility with the refrigerant. Such esters preferably have a viscosity of 6 $mm^2/s$ or less at 100°C.

To suitably adjust the viscosity of the lubricant, polymers for maintaining the compatibility with refrigerant may be added, in any suitable proportion, to the esters. It is preferable that such polymer has a viscosity of 10 $mm^2/s$ or more at 100°C.

As a polymer, a polyester of an aliphatic dicarboxylic acid with a polyalkylmethacrylate (e.g. containing a C4 - 8 alkyl group), polyalkylene glycol (e.g. copolymer comprising polypropylene glycol or polyethyleneglycol and polypropyleneglycol, or copolymer containing polypropyleneglycol and polytetramethyleneglycol), or neopentylglycol and represented by the following formula may be used.

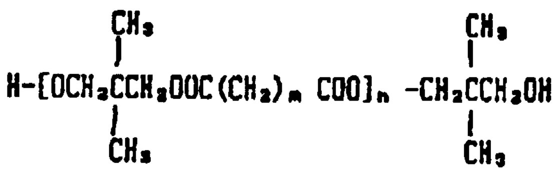

wherein m represents an integer of 1 - 20, and n an integer of 1 - 10.

Provided that the desired viscosity is obtained, normally, it is within the range between 1 wt% and 90 wt%.

To reduce wear on iron/aluminium contacts in the refrigerator, it is preferable to add to the lubricant one or more sulfur type anti-wear agents such as of the general formula:

$$(RO)_3\ P = S$$

wherein each R represents the same or different alkyl group, allyl group or phenyl group. Suitable types of the sulfur type anti-wear agent are a trialkylphosphorothionate, triphenylphosphorothionate and alkyldiallylphosphorothionate.

Sulfides such as diphenyl sulfide, diphenyl isdulfide, di-n-butyl sulfide, di-n-butyl disulfide, di-tert-dodecyl disulfide or di-tert-dodecyl trisulfide, a sulfurized oil such as sulfurized sperm oil or sulfurized dipentene, dithiocarbonates such

as an xanthate, or a zinc thiophosphate type anti-wear agent such as a primary or secondary alkyl zinc thiophosphate, alkyl-allyl zinc thiophosphate or allyl zinc thiophosphate can be used.

It is preferable to use such anti-wear agent in the following ratio to the ester oil: 0.01 - 5 wt %, more preferably, 0.1 - 3 wt %.

As antioxidant, an amine type antioxidant such as dioctyldiphenylamine, phenyl-α-naphthylamine, alkyldiphenylamine or N-nitrosodiphenylamine, phenol type antioxidant such as 2,6-di-t-butylparacresol, 4,4'-methylene-bis-(2-6-di-butylphenol), 2,6-di-t-butyl-α-dimethylamineparacresol or 2,6-di-t-butylphenol, phosphorus type antioxidant such as tris-(2,4-di-t-butylphenyl)phosphite, tris-nonylphenyl phosphite or triphenyl phosphite can be used. It is preferable to use such antioxidant in the following ratio to the ester: 0.01 - 10 wt %, or more preferably 0.01 - 1.0 wt%.

Suitable corrosion inhibitors are isostearate, n-octadecyl ammonium stearate, duomin T-diolate, lead naphthenate, sorbitan oleate, pentaerythrite oleate, oleyl sarcosine, alkyl succinic acid, alkenyl succinic acid and derivatives of these substances. The preferable mixing ratio to the ester oil is 0.001 - 1.0 wt %, or more preferably 0.01 - 0.5 wt %.

As defoaming agent, a silicone can be used. The preferable mixing ratio to the ester oil is: 0.0001 - 0.003 wt %, or more preferably 0.0001 - 0.001 wt %.

As metal deactivator, benzotriazole, benzotriazole derivative, thiadiazole, thiadiazole derivative, triazole, triazole derivative or dithiocarbamate, may be used, preferably in the following ratio to the ester oil: 0.01 - 10 wt %, or more preferably 0.01 - 1.0 wt %.

Further, as rust preventive, succinic acid, succinic acid ester, oleic acid tallow amide, barium sulfonate or calcium sulfonate may be used. These substances are used in the following ratio: 0.01 - 10 wt %, or more preferably 0.01 - 1.0 wt %.

The invention will be illustrated by the following examples of which Examples 1 to 9 are included to illustrate how the miscibility of esters and 1,1,1,2 tetrafluoroethane can vary according to the nature of the ester. Oils No. 4, 5, 13-16, 27 and 28 not having the miscibility required in the present invention. First, description is given of the methods used to evaluate the refrigerant oils as used in the Examples.

Compatibility test method

A specimen of lubricant oil and the refrigerant (1,1,1,2-tetrafluoroethane) are placed in a glass tube in the ratio of specimen oil to refrigerant of 3 and 10 wt % to make the toal volume to 2 ml, and these are mixed together. The glass tube is placed in a constant-temperature chamber provided with heating and cooling devices, and the separation temperature of specimen oil and refrigerant is measured.

Hygroscopic property test method

In a dessicator containing water, a specimen of lubricant oil is placed, and its hygroscopic property is measured over time at room temperature and at 95% humidity.

Example 1

The specimen oil 1 is an ester of dioctyl adipate, and the specimen oil 2 is an ester of pentaerythritol with straight chain $C_5$ - $C_9$ acid. The straight chain $C_5$ - $C_9$ acids consist of $C_5$ acid component by 30 wt %, $C_7$ acid component by 40 wt % and $C_9$ acid component by 30 wt %. Pentaerythritol and straight $C_5$ - $C_9$ acid are reacted with each other at the mol ratio of 1:4.

The specimen oil 3 is an ester of dipentaerythritol with straight chain $C_5$ - $C_7$ acid, and straight chain $C_5$ - $C_7$ acid consists of $C_5$ acid component by 30 wt W, $C_6$ and component by 60 wt %, and $C_7$ acid component by 10 wt %. Dipentaerythritol and straight chain $C_5$ - $C_7$ fatty acids are reacted with each other at mol ratio of 1:6.

The specimen oil 4 is an ester obtained by reaction of dihexyl succinate and the specimen oil 5 is an ester obtained by reaction of dipentaerythritol with oleic acid by mole ratio of 1:6.

Table 1 summarizes the results of the evaluation of performance characteristics as refrigerator oil when various types of ester oils are added to 1,1,1,2-tetrafluorethane.

Table 1

| | Specimen oil 1 | Specimen oil 2 | Specimen oil 3 | Specimen oil 4 | Specimen oil 5 |
|---|---|---|---|---|---|
| Viscosity ($mm^2/s$) at 100°C | 2.4 | 5.0 | 10.5 | 1.0 | 16.5 |
| Compatibility with refrigerant<br>Two-phase separation temperature at high temperature<br>. Oil component ratio 10 wt % | 110°C or more | 95°C | 100°C | 110°C or more | Separated at room temperature |
| . Oil component ratio 3 wt % | 110°C or more | 100°C | 105°C | 110°C or more | Separated at room temperature |
| Two-phase separation temperature at low temperature<br>. Oil component ratio 10 wt % | -40°C or less | -20°C | -40°C or less | -40°C or less | Separated at room temperature |
| Hygroscopic property (moisture %)<br>7 days | 0.04 | 0.06 | 0.09 | 0.02 | - |
| 14 days | 0.08 | 0.10 | 0.17 | 0.05 | - |
| 21 days | 0.13 | 0.16 | 0.27 | 0.10 | - |
| 28 days | 0.17 | 0.22 | 0.32 | 0.13 | - |
| Thermal stability 140°C x 24 hr. Evaporation loss | Low | Low | Low | High | Low |

As Table 1 shows, the specimen oils 1 - 3 have good compatiblity with refrigerant and low hygroscopic property, and these oils can be used as base oil for the lubricating oil for refrigerator. The specimen oil 4 having the viscosity of less than 2 $mm^2/s$ is thermally unstable, while the specimen oil 5 has high thermal stability but its compatibility is low.

Example 2

The specimen 6 is an ester of dipentaerythritol with aliphatic $C_5$ - $C_6$ acids, and aliphatic $C_5$ - $C_6$ acid contains 30 wt % $C_5$ acid components and 70 wt % $C_6$ acid component. Dipentaerythritol and the aliphatic $C_5$ - $C_6$ acids are reacted with each other at a mol ratio of 1:6.

The specimen oil 7 is an ester of pentaerythritol with aliphatic $C_5$ - $C_6$ acids. The aliphatic $C_5$ - $C_6$ acids contain 50 wt % each of $C_5$ acid component and $C_6$ acid component. Pentaerythritol and the aliphatic $C_5$ - $C_6$ acid are reacted with each other at a mol ratio of 1:4.

The specimen oil 8 is an ester of pentaerythritol with aliphatic $C_5$ - $C_7$ fatty acid, and aliphatic $C_5$ - $C_7$ fatty acid contains 30 wt %, $C_5$ acid component, 40 wt % $C_6$ acid component and 30 wt % $C_7$ acid component. Pentaerythritol and aliphatic $C_5$ - $C_7$ acid are reacted with each other at a mol ratio of 1:4.

The specimen oil 9 is an ester of tripentaerythritol with aliphatic $C_5$ - $C_6$ acid, and the aliphatic $C_5$ - $C_6$ acid contains $C_5$ acid component by 40 wt % and $C_6$ acid component by 60 wt %. Tripentaerythritol and aliphatic $C_5$ - $C_6$ acid are reacted with each other at mol ratio of 1:8.

The specimen oil 10 is an ester of pentaerythriotl and aliphatic $C_7$ - $C_9$ acid, and the aliphatic $C_7$ - $C_9$ acid contains 50 wt % each of $C_7$ and $C_9$ acid component. Pentaerythritol and the aliphatic $C_7$ - $C_9$ fatty acid are reacted with each other at a mol ratio of 1:4.

The specimen oil 11 is an ester of mixed alcohol of trimethylolpropane and pentaerythritol with aliphatic $C_5$ acid. The mixing ratio of trimethylolpropane and pentaerythritol is 50: 50 (wt %).

The specimen oil 12 is an ester of pentaerythritol and aliphatic $C_5$ - $C_6$ acid, and the aliphatic $C_5$ - $C_6$ acid contains 40 wt % $C_5$ acid component, and 60 wt % $C_6$ acid component. Pentaerythritol and the aliphatic $C_5$ - $C_6$ acid are reacted with each other at a mol ratio of 1:4.

The specimen oil 13 is an ester of trimethylolpropane and aliphatic $C_8$ - $C_{12}$ acid, and the trimethylolpropane and aliphatic $C_8$ - $C_{12}$ acid are reacted with each other at mol ratio of 1:3.

The specimen oil 14 is an ester of trimethylolpropane and aliphatic carboxylic acid having carbons of $C_8$ or more, and trimethylolpropane and aliphatic carboxylic acid having carbons of $C_8$ or more are reacted with each other at mol ratio of 1: 3.

The specimen oil 15 is a complex ester of trimethylolpropane and aliphatic $C_8$ - $C_{12}$ acid + adipic acid.

The specimen oil 16 is an ester having the same constitutents as the above specimen oil 15, but the mixing ratio of aliphatic $C_8$ - $C_{12}$ acid and adipic acid is different.

On these specimen oils, viscosity at 100°C ($mm^2/s$) and refrigerant compatibility (two-phase separation temperature) at high and low temperatures at oil component ratio 10% were measured. The results are shown in Table 2.

Table 2

| | Viscosity * | Viscosity index | Refrigerant compatibility (°C) | |
|---|---|---|---|---|
| | | | Low temperature | High temperature |
| Specimen oil 6 | 10.0 | 124 | -50°C or less | 97°C |
| Specimen oil 7 | 3.8 | 120 | -50°C or less | 110°C or more |
| Specimen oil 8 | 4.0 | 126 | -30°C | 100°C |
| Specimen oil 9 | 20.0 | 112 | -50°C or less | 90°C or more |
| Specimen oil 10 | 5.8 | 125 | +10°C | 80°C |
| Specimen oil 11 | 3.5 | 101 | -50°C or less | 110°C or more |
| Specimen oil 12 | 4.2 | 106 | -50°C or less | 110°C or more |
| Specimen oil 13 | 4.4 | 140 | Separated at room temperature | |
| Specimen oil 14 | 9.2 | 189 | Separated at room temperature | |
| Specimen oil 15 | 11.2 | 136 | Separated at room temperature | |
| Specimen oil 16 | 29.5 | - | Separated at room temperature | |

* $mm^2/s$ (100°C)

As Table 2 shows, the specimen oils 6 - 12 have high compatibility with refrigerant at high temperature as well as low temperature, and these oils can be used as base oil for the lubricating oil for refrigerator, but the specimen oils 13 - 16 have low refrigerant compatibility.

Example 3

The following table shows the specimen oils of Examples 1 and 2 used in combination.

Table 3

| Specimen oils | Viscosity * | Mixing ratio (wt %) | Refrigerant compatibility (°C) | |
|---|---|---|---|---|
| | | | Low temperature | High temperature |
| Combination of specimen oils 10 and 6 | 9.5 | 10:90 | -40°C or less | 90°C or more |
| Combination of specimen oils 2, 12 and 6 | 6.0 | 35:35:30 | -50°C or less | 110°C or more |

* $mm^2/s$ (100 °C)

Thus, the specimen oils 10 and 2 have low refrigerant compatibility at low temperature by themselves, whereas refrigerant compatibility is increased and viscosity can be adjusted if they are used with the specimen oils 6 and 12 as base oils.

Example 4

The specimen oils 17, 18 and 19 are prepared by adding polyalkylene glycol having viscosity of 13.0 $mm^2/s$ (100°C) to the specimen oil 2 in varying quantities, and refrigerant compatibility and hygroscopic property were measured. The results are given in Table 4.

Table 4

| Specimen oil | Specimen oil 17 | Specimen oil 18 | Specimen oil 19 |
|---|---|---|---|
| Polymer adding quantity (wt %) | 25 | 50 | 75 |
| Viscosity after blending (1) | 6.5 | 8.4 | 10.5 |
| Compatibility with refrigerant<br>Two-phase separation temperature at high temperature<br>. Oil component ratio 10 wt % | 85°C | 76°C | 66°C |
| . Oil component ratio 3 wt % | 91°C | 80°C | 71°C |
| Two-phase separation temperature at low temperature<br>. Oil component ratio 10 wt % | -40°C | -40°C or less | -40°C or less |
| Hygroscopic property (moisture %)<br>7 days | 0.3 | 0.6 | 1.0 |
| 14 days | 0.4 | 0.8 | 1.2 |
| 21 days | 0.4 | 0.9 | 1.4 |
| 28 days | 0.5 | 1.1 | 1.5 |

(1) $mm^2/s$ (100°C)

The specimen oils 17 - 29 have high compatibility with refrigerant and low hygroscopic property.

Example 5

Sealed tube test at high temperature was performed on the compatibile substance, which was obtained by mixing

the specimen oil 2 of the Example 1 with 1,1,1,2-tetrafluoroethane refrigerant.

The test method was as follows: First, 1 g of specimen oil 2, 1 g of 1,1,1,2-tetrafluoroethane as well as one piece each of iron, copper and aluminum (1.7 mm in diameter and 40 mm in length) were sealed in a glass tube. Then, it was heated at 175°C for 14 days (336 hours). At the completion of the test, the degree of discoloration of the specimen oil was measured, and the conditions of the metal test pieces were examined.

A similar test was performed on the compatible substance obtained by mixing the specimen oil 2 with the following additives and further with 1,1,1,2-tetrafluoroethane refrigerant. Also SRV vibration friction wearing test was performed to evaluate the lubricating property under the conditions as shown below.

As the additives, a metal deactivator benzotriazole (BTA) was added to the specimen oil 2 by 0.1 wt %, antioxidant 2,6-di-t-butylparacresol (DBPC) by 0.5 wt %, or antiwear agent tricresyl phosphate (TCP) by 0.5 wt %.

The conditions for SRV vibration friction wearing test:

| | |
|---|---|
| Test piece | : Steel ball of 10 mm in dia (SUJ2)/ aluminum plate (A390) |
| Oil temperature | : 140°C |
| Stroke | : 1.25 mm |
| Load | : 50 N |
| Frequency | : 15 Hz |
| Duration | : 30 minutes |

The results of the test are shown in Table 5A and Table 5B.

Table 5A

| To specimen oil 2 | | Color of specimen oil | | External appearance of test piece | | |
|---|---|---|---|---|---|---|
| Additives | Added q'ty | Before test | After test | Iron | Copper | Aluminum |
| - | - | 0.5 | L1.0 | Good | Good | Good |
| BTA | 0.1 | 0.5 | L1.0 | Good | Good | Good |
| DBPC | 0.5 | 0.5 | L1.0 | Good | Good | Good |
| TCP | 0.5 | 0.5 | L1.0 | Good | Good | Good |
| DBPC | 0.3 | 0.5 | L1.0 | Good | Good | Good |
| TCP | 0.3 | 0.5 | L1.0 | Good | Good | Good |

Added quantity is in wt %.

Table 5B

| | Composition (wt %) | Lubricating property (Wear scar m/m) |
|---|---|---|
| Specimen oil 2 | 100 | 1.10 |
| Specimen oil 2<br>+BTA<br>+DBPC<br>+TCP | 98.9<br>0.1<br>0.5<br>0.5 | 0.98 |
| Specimen oil 2<br>+DBPC<br>+TCP | 99.4<br>0.3<br>0.3 | 1.00 |

The lubricants of this invention showed no deterioration in color, and less sludge was generated during the test. The external appearance of the test pieces was satisfactory after the test, and it was found that the lubricants had excellent chemical and thermal stability as well as high lubricating property.

Next, exemplification is given for the case where the complex of the above type (3) is used as ester.

Example 6

Description is given first of the specimen oils to be used in this example.

The specimen oil 20 is obtained as follows: Pentaerythritol was used as polyol, and succinic acid was used as dicarboxylic acid. The monocarboxylic acid was aliphatic $C_5$ - $C_6$ acid having the molar ratio of $C_5$ acid to $C_6$ acid components of 1:1. To 2 mols of pentaerythritol, 1 mol of succinic acid was given to react, and 6 mols of monocarboxylic acid was reacted to obtain this specimen oil.

The specimen oil 21 is obtained as follows: Pentaerythritol was used as polyol, and adipic acid as dicarboxylic acid. The monocarboxylic acid was aliphatic $C_5$ - $C_6$ acid having a molar ratio of $C_5$ to $C_6$ acid components of 1:1. To 2 mols of pentaerythritol, 1 mol of adipic acid was added to react, and 6 mols of monocarboxylic acid was further reacted with it.

The specimen oil 22 is obtained as follows: Pantaerythritol was used as polyol. The monocarboxylic acid was aliphatic $C_5$ - $C_6$ acid of molar ratio of $C_5$ acid to $C_6$ acid components of 1:1, and this was used to perform esterification reaction for the preparation of an ester for viscosity adjustment. The specimen oil 22 was obtained by mixing 60 wt % of this ester for viscosity adjustment with 40 wt % of the above specimen oil 20.

The specimen oil 23 was obtained by mixing 80 wt % of the ester for viscosity adjustment used for the above specimen oil 22 with 20 wt % of the above specimen oil 21.

On these specimen oils of the present invention, the viscosity at 40°C and 100°C ($mm^2/s$) and refrigerant compatibility (two-phase separation temperature) at high and low temperatures and at oil component ratio 15% were measured. The results are given in Table 7.

The properties of the above ester oil for viscosity adjustment are also given as the specimen oil 25.

Table 6

| Specimen oil No. | Viscosity | | Viscosity index | Refrigerant compatibility | |
|---|---|---|---|---|---|
| | 40°C | 100°C | | Low temperature | High temperature |
| Specimen oil 20 | 84.14 | 12.52 | 146 | -40°C | 85°C |
| Specimen oil 21 | 86.62 | 13.03 | 150 | -40°C | 80°C |
| Specimen oil 22 | 44.47 | 7.494 | 134 | -50°C or less | 89°C |
| Specimen oil 23 | 58.47 | 9.510 | 146 | -40°C | 83°C |
| Specimen oil 24 | 16.30 | 3.751 | 120 | -50°C or less | -110°C or more |

It is evident from the above table that the specimen oils according to the present invention have excellent compatibility at both high and low temperatures.

On the specimen oil 23 in the above Example 5, a sealed tube test was performed by the same procedure as in the Example 4.

For this specimen oil, the results similar to those of the Example 4 were obtained.

Next, exemplification is given of the use of the type (6) esters in the lubricating oil for refrigerator.

Example 7

The specimen oil 25 is a diester synthesized from polyoxypropyleneglycol monoether (manufactured by Sanyo Chemical Co., Ltd.; LB-65; molecular weight 340) and adipic acid.

The specimen oil 26 is a triester synthesized from trimethylolpropanepropyleneoxide addition product (Sanyo Chemical Co., Ltd.; TP-400; molecular weight 400) and valeric acid.

The specimen oil 27 is a dihexyl succinate for comparison.

The specimen oil 28 is a commercial complex ester (viscosity 32.3 $mm^2/s$ at 100°C) for comparison.

Table 7 shows the results of evaluation as refrigerator oil when various types of ester oils are added to 1,1,1,2-tetrafluoroethane.

Table 7

| Specimen oil | Specimen oil 25 | Specimen oil 26 | Specimen oil 27 | Specimen oil 28 |
|---|---|---|---|---|
| Viscosity ($mm^2/s$) at 100°C | 5.15 | 5.11 | 1.0 | 32.3 |
| Compatibility with refrigerant<br>Two-phase separation temperature at high temperature<br>. Oil component ratio 10 wt % | 100°C | 95°C | 110°C or more | Separated at room temperature |
| . Oil component ratio 3 wt % | 105°C | 100°C | 110°C or more | Separated at room temperature |
| Two-phase separation temperature at low temperature<br>. Oil component ratio 10 wt % | -40°C or less | -40°C or less | -40°C or less | Separated at room temperature |
| Hygroscopic property (moisture %)<br>7 days | 0.04 | 0.09 | 0.02 | - |
| 14 days | 0.08 | 0.17 | 0.05 | - |
| 21 days | 0.13 | 0.27 | 0.10 | - |
| 28 days | 0.17 | 0.32 | 0.13 | - |
| Evaporation stability 140°C x 24 hr. Evaporation loss | Low | Low | High | Low |

From the above table, it is evident that the specimen oils 25 - 26 have high compatibility with refrigerant, low hydroscopic property and can be used as base oil (major component) for lubricant for a refrigerator. On the other hand, a specimen oil 27 having viscosity of less than 2 $mm^2/s$ has low thermal stability, while the specimen oil 28 having viscosity of 30 $mm^2/s$ or more has high thermal stability but low compatibility with refrigerant.

Example 8

To the above specimen oil 25, polyalkyleneglycol having viscosity of 13.0 $mm^2/s$ (100°C) was added as polymer in varying quantity to prepare the specimen oils 29, 30 and 31. For each of the lubricating oils for refrigerator, the compatibility with refrigerant and hygroscopic property were tested.

The results are summarized in Table 8.

Table 8

| Specimen oil | Specimen oil 29 | Specimen oil 30 | Specimen oil 31 |
|---|---|---|---|
| Polymer added q'ty (wt %) | 25 | 50 | 75 |
| Viscosity after blending (*1) | 6.5 | 8.4 | 10.5 |
| Compatibility with refrigerant<br>Two-phase separation temperature at high temperature<br>. Oil component ratio 10 wt % | 85 | 76 | 66 |
| . Oil component ratio 3 wt % | 91 | 80 | 71 |
| Two-phase separation temperature at high temperature<br>. Oil component ratio 10 wt % | -40°C | -40°C or less | -40°C or less |
| Hygroscopic property (moisture %)<br>7 days | 0.4 | 0.7 | 1.1 |
| 14 days | 0.5 | 0.9 | 1.2 |
| 21 days | 0.5 | 1.0 | 1.5 |
| 28 days | 0.7 | 1.2 | 1.6 |

*1 $mm^2/s$ (100°C)

The above table shows that the specimen oils 29 -31 have high compatibility with refrigerant and low hygroscopic property.

To the above specimen oil 26, sealed test tube was performed by the same procedure as in the Example 4, and the results similar to those of the Example 4 were obtained.

Next, exemplification is given of use of a branched carboxylic acid in esters for the lubricant for refrigerator.

Example 9

The specimen oil 32 is obtained by reaction of pentaerythritol with 2-ethyl butyric acid in mol ratio of 1:4.

The specimen oil 33 is obtained by reaction of pentaerythritol with 2-ethyl hexanoic acid in mol ratio of 1:4.

The specimen oil 34 is obtained by reaction of pentaerythritol with isononanic acid in mol ratio of 1:4.

The results of the evaluation of lubricating oil for refrigerator are given in Table 9 when various types of ester oils are added to 1,1,1,2-tetrafluoroethane.

Table 9

| Specimen oil | | Specimen oil 32 | Specimen oil 33 | Specimen oil 34 | Specimen oil 2 |
|---|---|---|---|---|---|
| Viscosity ($mm^2/s$) at 100°C | | 4.4 | 6.1 | 11.3 | 3.8 |
| Compatibility with refrigerant Two-phase separation temperature at high temperature • Oil component ratio 10 wt % | | 80°C or more | 80°C or more | 80°C or more | 95°C or more |
| • Oil component ratio 3 wt % | | 80°C or more | 80°C or more | 80°C or more | 100°C |
| Two-phase separation temperature at high temperature • Oil component ratio 10 wt % | | -40°C or less | -15°C | -25°C | -20°C |
| Hygroscopic property (moisture %) 7 days | | 0.02 | 0.02 | 0.02 | 0.06 |
| 14 days | | 0.04 | 0.04 | 0.04 | 0.10 |
| 21 days | | 0.05 | 0.05 | 0.06 | 0.16 |
| 28 days | | 0.06 | 0.06 | 0.07 | 0.22 |
| Hydrolytic stability (Total acid number mg KOH/g) | Before test | 0.03 | 0.03 | 0.03 | 0.03 |
| | After test | 2.2 | 2.2 | 2.4 | 3.2 |

The above table shows that the specimen oils 32 - 34 have high compatibility with refrigerant, low hygroscopic property and high hydrolytic stability.

Hydrolytic stability was measured as follows: 250 ml of oil was placed in an iron container having inner volume of 350 ml. One piece each of aluminum and copper wires (8 mm in inner diameter and 30 mm in length) was placed in it as catalysts. Further, 1000 ppm of water was added, and 40 g of 1,1,1,2-tetrafluoroethane was added as refrigerant. After it was heated at 175°C for 20 days, oil was taken out, and total acid number was measured.

Next, the following example shows use of purified esters in the lubricant for refrigerator.

Example 10

This Example illustrates the benefit of low ash according to the invention, specimen oils 40 to 42 being for comparison. The specimen oil 35 is an ester obtained through the reaction of 1 mol of pentaerythritol with 4 mols of aliphatic $C_5$ - $C_9$ acid after contact processing by a zeolite.

The specimen oils 36 and 40 are esters obtained by reaction of 1 mol of dipentaerythritol with 6 mols of aliphatic $C_5$ - $C_6$ acid. The specimen oil 36 is obtained by further contact processing with a zeolite.

The specimen oils 37 and 41 are esters obtained by reaction of 1 mol of pentaerythritol with 4 mols of $C_5$ - $C_6$ fatty acid. The specimen oil 37 is obtained by further contact processing with zeolite.

The specimen oil 38 is obtained by adding 0.02 wt % of metal deactivator benzotriazole and 0.2 wt % of antioxidant diphenylamine to the specimen oil 35.

The specimen oil 39 is obtained by adding the same additives as those for the above specimen oil 38 to the specimen oil 36.

The specimen oil 42 is obtained by adding the same additives as those for the above specimen oil 38 to the specimen oil 40.

To these specimen oils, performance was evaluated by the following methods:

Total acid number measuring method

Total acid number was determined by the neutralization number of JIS K 2501.

Peroxide number measuring method

Iodine titration method was used, by which potassium iodide was added to the specimen and the isolated iodine was titrated. The peroxide number is expressed in milliequivalent to 1 kg of the specimen.

Aldehyde number measuring method

Sodium hydroxide titration method was adopted by which hydroxylamine hydrochloride was added to the specimen and the isolated acid was titrated by sodium hydroxide.

Bromine index measuring method

Bromine index was determined by ASTM D 1492.

Ash content measuring method

Ash content was determined by the ash content test method of JIS K 2272.

Moisture measuring method

Moisture was determined by Karl Fischer method of the moisture testing methods of JIS K 2275.

Volume resistivity measuring method

Volume resistivity test of the electric insulating oil testing methods of JIS C 2101 was used.

Hydrolytic stability

In accordance with ASTM D 2619, the mixture of 75 g of the specimen and 25 g of water was heated together with copper catalyst at 93°C for 48 hours, and total acid number of the specimen oil was measured.

Refrigerant stability

The mixure of the specimen and R-134a mixed at mixing ratio of 2:1 was sealed in an autoclave together with iron, copper and aluminum catalysts and was heated at 175°C for 480 hours. Then, external appearance of the catalysts and total acid number and hue of the specimen oil were measured (autoclave method).

On the mixtures of the specimen oils as prepared above with 1,1,1,2-tetrafluoroethane refrigerant, a sealed tube test was performed at high temperature.

The test method (sealed tube test) is as follows: First, 1 g of refrigerant oil, 1 g of 1,1,1,2-tetrafluoroethane, and one piece each of iron, copper and aluminum test pieces (1.7 mm in diameter; 40 mm in length) were sealed in a glass tube, and this was heated at 175°C for 14 days (336 hours). After the test was completed, the change of color of the specimen oil was measured, and the conditions of the metal pieces were examined.

The properties of the specimen oils and the test results are shown in the table below.

Table 10

| | Specimen oil 35 | Specimen oil 36 | Specimen oil 37 | Specimen oil 38 | Specimen oil 39 | Specimen oil 40 | Specimen oil 41 | Specimen oil 42 |
|---|---|---|---|---|---|---|---|---|
| Total acid number (mg KOH/g) | 0.01 | 0.03 | 0.05 | 0.01 | 0.03 | 0.26 | 0.10 | 0.26 |
| Peroxide number (meq./kg) | 0.1 | 0.3 | 0.6 | 0.1 | 0.3 | 1.5 | 2 | 1.5 |
| Aldehyde number (mg KOH/g) | 0.1 | 0.1 | 0.1 | 0.1 | 0.1 | 2 | 2 | 2 |
| Bromine index (mg/100 g) | 1 | 5 | 7 | 1 | 5 | 13 | 10 | 13 |
| Ash content (ppm) | 3 | 4 | 4 | 3 | 4 | 16 | 10 | 16 |
| Moisture (ppm) | 100 | 200 | 200 | 400 | 450 | 600 | 600 | 800 |
| Color (ASTM) | L 0.5 | L 0.5 | L 1.0 | L 0.5 | 0.5 | 3.0 | L 0.5 | 3.0 |
| Volume resistivity (25°C Ω·cm) | $5.5x10^{13}$ | $2.1x10^{13}$ | $1.1x10^{13}$ | $5.6x10^{13}$ | $2.2x10^{13}$ | $5.0x10^{9}$ | $2.3x10^{10}$ | $5.2x10^{9}$ |
| Hydrolytic stability Total acid number (mg KOH/g) | 0.02 | 0.05 | 0.08 | 0.02 | 0.04 | 0.65 | 0.29 | 0.54 |
| Refrigerant stability Autoclave method Total acid number (mg KOH/g) | 0.10 | 0.4 | 1.0 | 0.10 | 0.35 | 6.0 | 4.0 | 5.5 |
| Color (ASTM) | 2.5 | 2.5 | 2.5 | 3.0 | 3.0 | 6.0 | 5.0 | 6.5 |
| External appearance of catalyst | No abnormal sign | No abnormal sign | No abnormal sign | No abnormal sign | No abnormal sign | No abnormal sign | No abnormal sign | No abnormal sign |
| Sealed tube method Color (ASTM) | 1.0 | 1.0 | 1.0 | 1.0 | 1.0 | 3.0 | 2.5 | 3.5 |
| External appearance of catalyst | No abnormal sign | No abnormal sign | No abnormal sign | No abnormal sign | No abnormal sign | No abnormal sign | No abnormal sign | No abnormal sign |

Thus, it is evident that the lubricating oils for refrigerator show less increase in total acid number, less change in hue after the test, keeping good external appearance of catalyst, and showing high hydrolytic stability, refrigerant stability and insulating property.

The effect of adding an anti-wear agent to lubricant for refrigerator of this invention was evaluated as follows.

Method to evaluate anti-wear property

This was evaluated by a LFW-1 friction wear test in accordance with ASTM D 2981. To simulate the conditions in practical application, the test'condition was set to oil temperature of 120°C, and the load was set to 9.1 kg (20 Lbs) based on the hardness of the aluminum material. Al-Sn alloy was used as test piece for aluminum material.

- Testing conditions
  Load 9.1 kg (20 Lbs); oil temperature 120°C; number of revolutions 1000 rpm; test duration 60 minutes
- Test piece material
  Ring SAE 4620 steel $H_{RC}$ = 50 ($H_v$ = 694)
  Block Al-Sn alloy $H_v$= 49

Example 11

On a lubricant for refrigerator comprising the following esters, the effect on friction wear of adding an anti-wear agent was evaluated.

The results of the evaluation on the following specimen oils are summarized in Table 11, and the results of the evaluation on the comparative specimen oil are shown in Table 12.

For all specimen oils, mixed ester oil consisting of 10 wt % of the ester (viscosity 5.0 at 100°C) of pentaerythritol and aliphatic $C_5$ - $C_9$ acid and of 90 wt % of the ester (viscosity 10.0 at 100°C) of dipentaerythriol and aliphatic $C_5$ - $C_6$ acid was used as base oil.

The specimen oils 43 and 44 contain triphenyl phosphorothionate as anti-wear agent, the specimen oils 45 and 46 contain trialkyl-($C_{12}$)-phosphorothionate as anti-wear agent, the comparative specimen oils 47 and 48 contain phsophorus type anti-wear agent tricresyl phosphate, the comparative specimen oil 49 contains phosphorous type anti-wear agent trioleyl phosphate, the comparative specimen oil 50 contains dilauryl hydrogenphosphate, and the comparative specimen oil 41 contains no anti-wear agent.

Dialkyldiphenylamine was used as antioxidant, succinic acid imide was used as corrosion inhibitor, and silicone was used as defoaming agent.

The added quantity of each additive is given in wt %.

Table 11

| | Specimen oil 43 | Specimen oil 44 | Specimen oil 45 | Specimen oil 46 |
|---|---|---|---|---|
| Anti-wear agent added q'ty | 0.3 | 0.5 | 0.3 | 0.6 |
| Antioxidant added q'ty | 0.4 | 0.4 | 0.4 | 0.4 |
| Corrosion inhibitor added q'ty | 0.12 | 0.12 | 0.12 | 0.12 |
| Defoaming agent added q'ty | 0.0005 | 0.0005 | 0.0005 | 0.0005 |
| Items of evaluation Al wearing (mg) | 5 | 8 | 7 | 9 |

Table 12

| | Specimen oil 47 | Specimen oil 48 | Specimen oil 49 | Specimen oil 50 | Specimen oil 51 |
|---|---|---|---|---|---|
| Anti-wear agent added q'ty | 0.3 | 1.8 | 2.0 | 0.5 | -- |
| Antioxidant added q'ty | 0.4 | 0.4 | 0.4 | 0.4 | 0.4 |

Table 12 (continued)

| | Specimen oil 47 | Specimen oil 48 | Specimen oil 49 | Specimen oil 50 | Specimen oil 51 |
|---|---|---|---|---|---|
| Corrosion inhibitor added q'ty | 0.12 | 0.12 | 0.12 | 0.12 | 0.12 |
| Defoaming agent added q'ty | 0.0005 | 0.0005 | 0.0005 | 0.0005 | 0.0005 |
| Items of evaluation A1 wearing (mg) | 16 | 24 | 36 | 22 | 18 |

As it is evident from the above tables, an excellent anti-wear effect is obtained when a sulfur type anti-wear agent is used (specimen oils 43 - 46), whereas the antiwear effect is decreased even when compared with the specimen oil 51, to which no anti-wear agent is added, when a phosphorus type of anti-wear agent is used (specimen oils 47 - 50 ).

**Claims**

1. A lubricating oil for a refrigerant comprising an ester of an organic carboxylic acid, which is miscible without separation from a 10 wt % solution of the ester in the refrigerant 1,1,1,2-tetrafluroethane at a temperature in the range of 10°C to 66°C and which has a viscosity range of 2 to 30 $mm^2/s$ at 100°C, and an ash content of less than 10 ppm.

2. A lubricating oil according to claim 1 which is miscible at a temperature in the range -15°C to 66°C.

3. A lubricating oil according to claim 1 or claim 2 having a total acid number of 0.05 mg KOH/g or less.

4. A lubricating oil according to claim 3 having a total acid number of 0.03 mg KOH/g or less.

5. A lubricating oil according to any of the preceding claims having a moisture content of less than 500 ppm.

6. A lubricating oil according to any of the preceding claims having a peroxide number of 1 meg/kg or less.

7. A lubricating oil according to any of the preceding claims having an aldehyde number of 1 mg KOH/g or less.

8. A lubricating oil according to any of the preceding claims having a bromine number index of 10 mg/100g or less.

9. A lubricating oil according to any of the preceding claims having a volume resistivity at 25°C of at least 1.1 x $10^{13}\Omega$ cm.

10. A lubricating oil according to any of the preceding claims wherein the ester is of an alphatic polyhydric alcohol and aliphatic carboxylic acids.

11. A lubricating oil according to any of the preceding claims wherein the ester is a partial ester of an aliphatic polyhydric alcohol and aliphatic carboxylic acids.

12. A lubricating oil according to any of the preceding claims wherein the ester is a complex ester of an aliphatic polyhydric alcohol and a fatty acid having 3-12 carbon atoms and an aliphatic or aromatic dicarboxylic acid.

13. A lubricant according to any one of claims 1 to 9 wherein said ester is a diester of an aliphatic monohydric alcohol and a aliphatic dicarboxylic acid.

14. A lubricant according to any one of claims 1 to 9 wherein said ester is a diester of an aliphatic monohydric alcohol and an aromatic dicarboxylic acid.

**15.** A lubricant according to any of the preceding claims which is an ester of a polyol and $C_3$ - $C_{12}$ straight chain or branched chain carboxylic acids.

**16.** A lubricant according to claim 15 which is a mixture of esters derived from different carboxylic acids.

**17.** A lubricant according to any claim 15 or claim 16 in which the polyol is trimethylolpropane, ditrimethylolpropane, trimethylolethane, ditrimethylolethane, pentaerythritol, dipentaerythritol and tripentaerythritol.

**18.** A lubricant according to claim 17 in which the acids contain from 3 to 9 carbon atoms.

**19.** A lubricant according to any of the preceding claims, comprising a mixture of oily esters.

**20.** A lubricant according to any of the preceding claims comprising diesters of neopentyl gycol and a branched or straight chain $C_6$-$C_9$ carboxylic acid.

**21.** A lubricant according to any of the preceding claims which comprises an ester of a polyoxyalklene glycol monoether.

**22.** A lubricant according to any of the preceding claims which comprises an ester of a polyoxyalkylene additive to a trimethylolalkane of formula B as hereinbefore defined.

**23.** A lubricant according to any of the preceding claims which comprises mixtures of esters having different viscosities.

**24.** A lubricant according to any of the preceding claims which also contain a polymer selected from a polyester of polyalkylmethacrylate, polyalkylene glycol or neopentylglycol and aliphatic carboxylic acid.

**25.** A lubricant according to any of the preceding claims which also includes a sulfur type of anti-wear agent.

**26.** Lubricating oil for a refrigerant according to any of the preceding claims comprising an ester of one or more $C_3$-$C_{12}$ aliphatic carboxylic acids and one or more of trimethylolpropane, ditrimethylolethane, ditrimethylolethane, pentaerythritol, dipentaerythritol, triperitaerythritol and neopentyl glycol which is miscible without separation with the refrigerant 1,1,1,2 tetrafluroethane at a temperature in the range -15°C to 66°C has a viscosity in the range of 2 to 30 $mm^2/s$ at 100°C, an ash content of 10 ppm or less, a moisture content of less than 500 ppm and a total acid number of 0.05 mg/KOH/g.

**27.** A lubricating oil according to claim 26 having a volume resistivity at 25°C of a least $1.1 \times 10^{13}$ Ω cm.

**28.** A refrigerant composition which comprises 1,1,1,2-tetraflluoroethane and a lubricant as claimed in any preceding claim.

**29.** A refrigerant composition according to claim 28 in which the lubricant is a mixture of esters of viscosity at 100°C of 2-15 $mm^2$/sec.

**30.** A refrigerant composition according to claim 28 or claim 29 in which the lubricant is a mixture of esters of viscosity at 100°C of 2-11 $mm^2$/sec.

**31.** A refrigerant composition according to any of claims 28 to 30 containing from 0.01 to 5 wt % based on the ester of an antiwear agent.

**32.** A refrigerant composition according to any of claims 28 to 31 containing from 0.1 wt % to 10 wt % based on the ester of an antioxidant.

**33.** A refrigerant composition according to any of claims 28 to 32 containing from 0.001 to 1.0 wt % based on the ester of a corrosion inhibitor.

**34.** A refrigerant composition according to any of claims 28 to 33 containing from 0.0001 to 0.001 wt % based on the ester of a defoaming agent.

**35.** A refrigerant composition according to any of claims 28 to 34 containing from 0.01 wt % to 10 wt % based on the

ester of a metal deactivator.

**36.** A refrigerant composition according to any of claims 28 to 35 containing from 0.01 to 1.0 wt % based on the ester of a rust preventative.

**37.** A refrigerant composition according to any of claims 28 to 36 for use in a car air conditioner of the reciprocating type compressor characterised in that the viscosity of the lubricant is 7 to 15 $mm^2/s$.

**38.** A refrigerant composition according to any of claims 28 to 36 for use in a car air conditioner of the rotary type compressor characterised in that the viscosity of the lubricant is 15 to 30 $mm^2/s$.

**39.** A refrigerant composition according to claim 38 in which the viscosity of the lubricant is from 20 to 27 $mm^2/s$.

**40.** A refrigerant composition according to any of the claims 28 to 36 for use in a refrigerator characterised in that the lubricant has a viscosity at 100°C of 2 to 9 $mm^2/sec$.

**Patentansprüche**

**1.** Schmieröl für ein Kühlmittel, welches einen Ester einer organischen Carbonsäure umfaßt, der ohne Trennung von einer 10 gew.-%igen Lösung des Esters in das Kühlmittel 1,1,1,2-Tetrafluorethan bei einer Temperatur im Bereich von 10 °C bis 66 °C mischbar ist, einen Viskositätsbereich von 2 bis 30 $mm^2/s$ bei 100 °C aufweist und einen Aschegehalt von weniger als 10 ppm hat.

**2.** Schmieröl nach Anspruch 1, das bei einer Temperatur im Bereich von -15 °C bis 66 °C mischbar ist.

**3.** Schmieröl nach Anspruch 1 oder 2 mit einer gesamtsäurezahl von 0,05 mg KOH/g oder weniger.

**4.** Schmieröl nach Anspruch 3 mit einer Gesamtsäurezahl von 0,03 mg KOH/g oder weniger.

**5.** Schmieröl nach einem der vorhergehenden Ansprüche mit einem Feuchtigkeitsgehalt von weniger als 500 ppm.

**6.** Schmieröl nach einem der vorhergehenden Ansprüche mit einer Peroxidzahl von 1 mÄq/kg oder weniger.

**7.** Schmieröl nach einem der vorhergehenden Ansprüche mit einer Aldehydzahl von 1 mg KOH/g oder weniger.

**8.** Schmieröl nach einem der vorhergehenden Ansprüche mit einem Bromzahlindex von 10 mg/100 g oder weniger.

**9.** Schmieröl nach einem der vorhergehenden Ansprüche mit einem Volumenwiderstand bei 25 °C von mindestens $1,1 \times 10^{13}$ Ωcm.

**10.** Schmieröl nach einem der vorhergehenden Ansprüche, bei dem der Ester aus einem aliphatischen mehrwertigen Alkohol und aliphatischen Carbonsäuren ist.

**11.** Schmieröl nach einem der vorhergehenden Ansprüche, bei dem der Ester ein partieller Ester aus einem aliphatischen mehrwertigen Alkohol und aliphatischen Carbonsäuren ist.

**12.** Schmieröl nach einem der vorhergehenden Ansprüche, bei dem der Ester ein komplexer Ester aus einem aliphatischen mehrwertigen Alkohol und einer Fettsäure mit 3 bis 12 Kohlenstoffatomen und einer aliphatischen oder aromatischen Dicarbonsäure ist.

**13.** Schmiermittel nach einem der Ansprüche 1 bis 9, bei dem der Ester ein Diester aus einem aliphatischen einwertigen Alkohol und einer aliphatischen Dicarbonsäure ist.

**14.** Schmiermittel nach einem der Ansprüche 1 bis 9, bei dem Ester ein Diester aus einem aliphatischen einwertigen Alkohol und einer aromatischen Dicarbonsäure ist.

**15.** Schmiermittel nach einem der vorhergehenden Ansprüche, das ein Ester aus einem Polyol und geradkettigen oder

verzweigtkettigen $C_3$-$C_{12}$-Carbonsäuren ist.

**16.** Schmiermittel nach Anspruch 15, das eine Mischung von Estern ist, die sich von verschiedenen Carbonsäuren ableiten.

**17.** Schmiermittel nach Anspruch 15 oder Anspruch 16, bei dem das Polyol Trimethylolpropan, Ditrimethylolpropan, Trimethylolethan, Ditrimethylolethan, Pentaerythrit, Dipentaerythrit und Tripentaerythrit ist.

**18.** Schmiermittel nach Anspruch 17, bei dem die Säuren 3 bis 9 Kohlenstoffatome enthalten.

**19.** Schmiermittel nach einem der vorhergehenden Ansprüche, das eine Mischung von öligen Estern umfaßt.

**20.** Schmiermittel nach einem der vorhergehenden Ansprüche, das Diester von Neopentyglykol und einer gerad- oder verzweigtkettigen $C_6$-$C_9$-Carbonsäure umfaßt.

**21.** Schmiermittel nach einem der vorhergehenden Ansprüche, das einen Ester aus einem Polyoxyalkylenglykolmonoether umfaßt.

**22.** Schmiermittel nach einem der vorhergehenden Ansprüche, das einen Ester aus einem Polyoxyalkylenadditiv für ein Trimethylolalkan gemäß der hierin zuvor definierten Formel B umfaßt.

**23.** Schmiermittel nach einem der vorhergehenden Ansprüche, das Mischungen von Estern mit verschiedenen viskositäten umfaßt.

**24.** Schmiermittel nach einem der vorhergehenden Ansprüche, das außerdem ein Polymer ausgewählt aus einem Polyester aus Polyalkylmethacrylat, Polyalkylenglykol oder Neopentylglykol und aliphatischer Carbonsäure umfaßt.

**25.** Schmiermittel nach einem der vorhergehenden Ansprüche, das auch ein Antiverschleißmittel vom Schwefeltyp einschließt.

**26.** Schmieröl für ein Kühlmittel nach einem der vorhergehenden Ansprüche, das einen Ester aus einer oder mehreren aliphatischen $C_3$-$C_{12}$-Carbonsäure und einem oder mehreren von Trimethylolpropan, Ditrimethylolethan, Ditrimethylolethan, Pentaerythrit, Dipentaerythrit, Tripentaerythrit und Neopentyglykol umfaßt, der ohne Trennung mit dem Kühlmittel 1,1,1,2-Tetrafluorethan bei einer Temperatur im Bereich von -15 °C bis 66 °C mischbar ist, eine Viskosität im Bereich von 2 bis 30 $mm^2/s$ bei 100 °C, einen Aschegehalt von 10 ppm oder weniger, einen Feuchtigkeitsgehalt von weniger als 500 ppm und eine Gesamtsäurezahl von 0,05 mg KOH/g aufweist.

**27.** Schmieröl nach Anspruch 26 mit einem Volumenwiderstand bei 25 °C von mindestens 1,1 x $10^{13}$ Ωcm.

**28.** Kühlmittelzusammensetzng, die 1,1,1,2-Tetrafluorethan und ein Schmiermittel gemäß einem der vorhergehenden Ansprüche umfaßt.

**29.** Kühlmittelzusammensetzng nach Anspruch 28, bei der das Schmiermittel eine Mischung von Estern mit einer Viskosität im Bereich von 2 bis 15 $mm^2/s$ bei 100 °C ist.

**30.** Kühlmittelzusammensetzng nach Anspruch 28 oder Anspruch 29, bei der das Schmiermittel eine Mischung von Estern mit einer Viskosität im Bereich von 2 bis 11 $mm^2/s$ bei 100 °C ist.

**31.** Kühlmittelzusammensetzng nach einem der Ansprüche 28 bis 30, die 0,01 bis 5 Gew.%, bezogen auf den Ester, an Antiverschleißmittel enthält.

**32.** Kühlmittelzusammensetzng nach einem der Ansprüche 28 bis 31, die 0,1 bis 10 Gew.%, bezogen auf den Ester, an Antioxidans enthält.

**33.** Kühlmittelzusammensetzng nach einem der Ansprüche 28 bis 32, die 0,001 bis 1,0 Gew.%, bezogen auf den Ester, an Korrosionsinhibitor enthält.

**34.** Kühlmittelzusammensetzng nach einem der Ansprüche 28 bis 33, die 0,0001 bis 0,001 Gew.%, bezogen auf den Ester, an Entschäumungsmittel enthält.

**35.** Kühlmittelzusammensetzng nach einem der Ansprüche 28 bis 34, die 0,01 bis 10 Gew.%, bezogen auf den Ester, an Metaldeaktivator enthält.

**36.** Kühlmittelzusammensetzng nach einem der Ansprüche 28 bis 35, die 0,01 bis 1,0 Gew.%, bezogen auf den Ester, an Rostschutzmittel enthält.

**37.** Kühlmittelzusammensetzng nach einem der Ansprüche 28 bis 36 für die Verwendung in einer Autoklimaanlage von der Art mit einem sich hin- und herbewegenden Kompressors, dadurch gekennzeichnet, daß die Viskosität des Schmiermittels 7 bis 15 $mm^2/s$ beträgt.

**38.** Kühlmittelzusammensetzng nach einem der Ansprüche 28 bis 36 für die Verwendung in einer Autoklimaanlage von der Art mit einem sich drehenden Kompressors, dadurch gekennzeichnet, daß die Viskosität des Schmiermittels 15 bis 30 $mm^2/s$ beträgt.

**39.** Kühlmittelzusammensetzng nach Anspruch 38, bei der die Viskosität des Schmiermittels 20 bis 27 $mm^2/s$ beträgt.

**40.** Kühlmittelzusammensetzng nach einem der Ansprüche 28 bis 36 für die Verwendung in einem Kühlschrank, dadurch gekennzeichnet, daß das Schmiermittel eine Viskosität bei 100 °C von 2 bis 9 $mm^2/s$ hat.

**Revendications**

**1.** Huile lubrifiante pour un réfrigérant, comprenant un ester d'un acide carboxylique organique, qui est miscible sans séparation à partir d'une solution à 10 % en poids de l'ester dans le réfrigérant consistant en 1,1,1,2-tétrafluoréthane à une température comprise dans l'intervalle de 10°C à 66°C et qui a une viscosité comprise dans l'intervalle de 2 à 30 $mm^2/s$ à 100°C et une teneur en cendres inférieure à 10 ppm.

**2.** Huile lubrifiante suivant la revendication 1, qui est miscible à une température comprise dans l'intervalle de -15°C à 66°C.

**3.** Huile lubrifiante suivant la revendication 1 ou la revendication 2, ayant un indice d'acide total égal ou inférieur à 0,05 mg de KOH par gramme.

**4.** Huile lubrifiante suivant la revendication 3, ayant un indice d'acide total égal ou inférieur à 0,03 mg de KOH par gramme.

**5.** Huile lubrifiante suivant l'une quelconque des revendications précédentes, ayant une teneur en humidité inférieure à 500 ppm.

**6.** Huile lubrifiante suivant l'une quelconque des revendications précédentes, ayant un indice de peroxyde égal ou inférieur à 1 meq/kg.

**7.** Huile lubrifiante suivant l'une quelconque des revendications précédentes, ayant un indice d'aldéhyde égal ou inférieur à 1 mg de KOH par gramme.

**8.** Huile lubrifiante suivant l'une quelconque des revendications précédentes, ayant un indice numérique de brome égal ou inférieur à 10 mg pour 100 grammes.

**9.** Huile lubrifiante suivant l'une quelconque des revendications précédentes, ayant une résistivité volumique à 25°C d'au moins 1,1 x $10^{13}$ ohm.cm.

**10.** Huile lubrifiante suivant l'une quelconque des revendications précédentes, dans laquelle l'ester est un ester d'un alcool polyhydroxylique aliphatique et d'acides carboxyliques aliphatiques.

**11.** Huile lubrifiante suivant l'une quelconque des revendications précédentes, dans laquelle l'ester est un ester partiel

d'un alcool polyhydroxylique aliphatique et d'acides carboxyliques aliphatiques.

**12.** Huile lubrifiante suivant l'une quelconque des revendications précédentes, dans laquelle l'ester est un ester complexe d'un alcool polyhydroxylique aliphatique et d'un acide gras ayant 3 à 12 atomes de carbone et d'un acide dicarboxylique aliphatique ou aromatique.

**13.** Lubrifiant suivant l'une quelconque des revendications 1 à 9, dans lequel l'ester est un diester d'un alcool monohydroxylique aliphatique et d'un acide dicarboxylique aliphatique.

**14.** Lubrifiant suivant l'une quelconque des revendications 1 à 9, dans lequel l'ester est un diester d'un alcool monohydroxylique aliphatique et d'un acide dicarboxylique aromatique.

**15.** Lubrifiant suivant l'une quelconque des revendications précédentes, qui est un ester d'un polyol et d'acides carboxyliques en $C_3$ à $C_{12}$ à chaîne droite ou à chaîne ramifiée.

**16.** Lubrifiant suivant la revendication 15, qui est un mélange d'esters dérivés d'acides carboxyliques différents.

**17.** Lubrifiant suivant l'une quelconque des revendications 15 et 16, dans lequel le polyol consiste en triméthylolpropane, ditriméthylolpropane, triméthyloléthane, ditriméthyloléthane, pentaérythritol, dipentaérythritol et tripentaérythritol.

**18.** Lubrifiant suivant la revendication 17, dans lequel les acides contiennent 3 à 9 atomes de carbone.

**19.** Lubrifiant suivant l'une quelconque des revendications précédentes, comprenant un mélange d'esters huileux.

**20.** Lubrifiant suivant l'une quelconque des revendications précédentes, comprenant des diesters de néopentylglycol et d'un acide carboxylique en $C_6$ à $C_9$ ramifié ou à chaîne droite.

**21.** Lubrifiant suivant l'une quelconque des revendications précédentes, qui comprend un ester d'un monoéther de polyoxyalkylène-glycol.

**22.** Lubrifiant suivant l'une quelconque des revendications précédentes, qui comprend un ester d'un additif du type polyoxyalkylène à un triméthylolalcane de formule B répondant à la définition mentionnée précédemment.

**23.** Lubrifiant suivant l'une quelconque des revendications précédentes, qui comprend des mélanges d'esters ayant des viscosités différentes.

**24.** Lubrifiant suivant l'une quelconque des revendications précédentes, qui contient un polymère choisi entre un polyester de poly(méthacrylate d'alkyle), poly-alkylène-glycol ou néopentylglycol et d'un acide carboxylique aliphatique.

**25.** Lubrifiant suivant l'une quelconque des revendications précédentes, qui comprend également un agent anti-usure renfermant du soufre.

**26.** Huile lubrifiante pour un réfrigérant suivant l'une quelconque des revendications précédentes, comprenant un ester d'un ou plusieurs acides carboxyliques aliphatique en $C_3$ à $C_{12}$ et d'un ou plusieurs des composés consistant en triméthylolpropane, ditriméthyloléthane, pentaérythritol, dipentaérythritol, tripentaérythritol et néopentylglycol, qui est miscible sans séparation avec le réfrigérant consistant en 1,1,1,2-tétrafluoréthane à une température comprise dans l'intervalle de -15°C à 66°C et qui a une viscosité comprise dans l'intervalle de 2 à 30 $mm^2/s$ à 100°C, une teneur en cendres égale ou inférieure à 10 ppm, une teneur en humidité inférieure à 500 ppm et un indice d'acide total égal à 0,05 mg de KOH/gramme.

**27.** Huile lubrifiante suivant la revendication 26, ayant une résistivité volumique à 25°C d'au moins 1,1 x $10^{13}$ ohm.cm.

**28.** Composition de réfrigérant qui comprend du 1,1,1,2-tétrafluoréthane et un lubrifiant suivant l'une quelconque des revendications précédentes.

**29.** Composition de réfrigérant suivant la revendication 28, dans laquelle le lubrifiant est un mélange d'esters ayant

une viscosité à 100°C de 2 à 15 $mm^2/s$.

**30.** Composition de réfrigérant suivant la revendication 28 ou la revendication 29, dans laquelle le lubrifiant est un mélange d'esters ayant une viscosité à 100°C de 2 à 11 $mm^2/s$.

**31.** Composition de réfrigérant suivant l'une quelconque des revendications 28 à 30, contenant 0,01 à 5 % en poids, sur la base de l'ester, d'un agent anti-usure.

**32.** Composition de réfrigérant suivant l'une quelconque des revendications 28 à 31, contenant 0,1 à 10 % en poids, sur la base de l'ester, d'un antioxydant.

**33.** Composition de réfrigérant suivant l'une quelconque des revendications 28 à 32, contenant 0,001 à 1,0 % en poids, sur la base de l'ester, d'un inhibiteur de corrosion.

**34.** Composition de réfrigérant suivant l'une quelconque des revendications 28 à 33, contenant 0,0001 à 0,001 % en poids, sur la base de l'ester, d'un agent anti-mousse.

**35.** Composition de réfrigérant suivant l'une quelconque des revendications 28 à 34, contenant 0,01 à 10 % en poids, sur la base de l'ester, d'un désactivateur de métaux.

**36.** Composition de réfrigérant suivant l'une quelconque des revendications 28 à 35, contenant 0,01 à 1,0 % en poids, sur la base de l'ester, d'un additif anti-rouille.

**37.** Composition de réfrigérant suivant l'une quelconque des revendications 28 à 36 destinée à être utilisée dans un climatiseur d'air pour automobiles du type compresseur à mouvement alternatif, caractérisée en ce que la viscosité du lubrifiant est comprise dans l'intervalle de 7 à 15 $mm^2/s$.

**38.** Composition de réfrigérant suivant l'une quelconque des revendications 28 à 36 destinée à être utilisée dans un climatiseur d'air pour automobiles, du type compresseur rotatif, caractérisée en ce que la viscosité du lubrifiant est comprise dans l'intervalle de 15 à 30 $mm^2/s$.

**39.** Composition de réfrigérant suivant la revendication 38, dans laquelle la viscosité du lubrifiant est comprise dans l'intervalle de 20 à 27 $mm^2/s$.

**40.** Composition de réfrigérant suivant l'une quelconque des revendications 28 à 36 destinée à être utilisée dans un réfrigérateur, caractérisée en ce que le lubrifiant a une viscosité à 100°C de 2 à 9 $mm^2/s$.